# EUROPEAN PATENT APPLICATION

(11) **EP 4 382 563 A1**
(43) Date of publication of application: **12.06.2024**
(21) Application number: 21952913.8
(22) Date of filing: 08.12.2021
(51) Int. Cl.: C08L 11/00, C08K 3/04, C08K 3/06, C08K 3/36, C08K 5/54, C08L 9/00, C08L 91/00, F16L 11/10

(54) **RUBBER COMPOSITION FOR HOSE, AND HOSE**

(30) Priority: 04.08.2021 JP 2021128353
(71) Applicant: The Yokohama Rubber Co., Ltd., Hiratsuka-shi, Kanagawa 254-8601 (JP)
(72) Inventor: MIZUTANI Yuki, Hiratsuka-shi, Kanagawa 254-8601 (JP)
(74) Representative: Grünecker Patent- und Rechtsanwälte PartG mbB
(86) International application number: PCT/JP2021/045133
(87) International publication number: WO 2023/013091

(57) **Abstract**

An object of the present invention is to provide a rubber composition for a hose that is excellent in processability, the composition being capable of obtaining a resulting rubber having excellent flame retardancy, wear resistance, and compression set, and a hose. The present invention is a rubber composition for a hose including a rubber component containing chloroprene rubber and butadiene rubber, sulfur, and an aromatic oil, the chloroprene rubber being contained in an amount of 60 mass% or more and less than 75 mass% of a total mass of the rubber component, the butadiene rubber being contained in an amount of more than 25 mass% and 40 mass% or less of the total mass of the rubber component, the sulfur being contained in an amount of more than 0.2 parts by mass and less than 2.5 parts by mass per 100 parts by mass of the rubber component, the aromatic oil being contained in an amount of 10 parts by mass or more per 100 parts by mass of the rubber component, and a silane coupling agent being contained in an amount of from 0 to 2 mass% with respect to the total mass of the rubber component.

## Description

### Technical Field

The present invention relates to a rubber composition for a hose and a hose.

### Background Art

Hoses (hydraulic piping hoses, hydraulic hoses) used in hydraulic systems for construction machines, machine tools, and the like have been increasingly used in coal mines and mines in recent years, and thus, they are required to have flame retardancy in consideration of safety during work.

For example, in the United States, the flame retardancy required for hydraulic piping hoses is mainly defined by MSHA standards (U.S. Mine Safety and Health Administration standards).

As such a rubber composition for a hose having flame retardancy, Patent Document 1 describes "a rubber composition for a hose including a rubber component, carbon black, and a plasticizer component, wherein 60 parts by mass or more of chloroprene rubber is contained in 100 parts by mass of the rubber component, more than 50 parts by mass of the carbon black is contained per 100 parts by mass of the rubber component, the plasticizer component includes a flame-retardant plasticizer, and 2 parts by mass or more of the flame-retardant plasticizer is contained per 100 parts by mass of the rubber component" (claim 1).

### Citation List

### Patent Literature

Patent Document 1: WO 2016/199388

### Summary of Invention

### Technical Problem

Rubber (outer surface rubber) forming the outer surface of a hydraulic hose is easily worn due to rubbing between reels and hoses. Continuous such rubbing may cause a reinforcing layer wire to be exposed from the hydraulic hose and the hydraulic hose to be broken at an early stage. Thus, the hydraulic hose is also required to have wear resistance.

Under such circumstances, the present inventors have considered that it is effective to blend chloroprene rubber (CR) and silica into a rubber composition in order to improve flame retardancy, and that it is effective to blend a silane coupling agent into a rubber composition in order to improve wear resistance, and have prepared a rubber composition with reference to Patent Document 1 and evaluated the rubber composition.

However, it has been found that such a rubber composition may have a short scorch time, or a resulting rubber may have a poor compression set or wear resistance, depending on the compounding of the rubber or the compounding of the silane coupling agent.

Having a short Mooney scorch time means that the processability (processing stability, the same applies hereinafter) of the rubber composition is poor.

When the wear resistance is poor, there is a high possibility that the durability of the hose deteriorates as described above.

When the compression set is poor, there is a high possibility that leakage will occur from a portion where the hose is connected.

An object of the present invention is to provide a rubber composition for a hose that is excellent in processability, the composition being capable of obtaining a resulting rubber having excellent flame retardancy, wear resistance, and compression set.

Another object of the present invention is to provide a hose excellent in processability, flame retardancy, wear resistance, and sealability.

### Solution to Problem

As a result of intensive studies to solve the problem, the present inventors have found that a desired effect can be obtained by containing a rubber component including chloroprene rubber and butadiene rubber, sulfur, and an aromatic oil in specific amounts, respectively, wherein the content of a silane coupling agent is from 0 to 2 mass% with respect to the rubber component, and have thus completed the present invention.

An embodiment of the present invention is based on the findings described above, and specifically solves the problems described above by the following configurations.
[1] A rubber composition for a hose, the rubber composition including:
   a rubber component containing chloroprene rubber and butadiene rubber;
   sulfur; and
   an aromatic oil,
   the chloroprene rubber being contained in an amount of 60 mass% or more and less than 75 mass% of a total mass of the rubber component,
   the butadiene rubber being contained in an amount of more than 25 mass% and 40 mass% or less of the total mass of the rubber component,
   the sulfur being contained in an amount of more than 0.2 parts by mass and less than 2.5 parts by mass per 100 parts by mass of the rubber component,
   the aromatic oil being contained in an amount of 10 parts by mass or more per 100 parts by mass of the rubber component, and
   a silane coupling agent being contained in an amount of from 0 to 2 mass% with respect to the total mass of the rubber component.
[2] The rubber composition for a hose according to [1], wherein a total content of the chloroprene rubber and the butadiene rubber is more than 90 mass% of the total mass of the rubber component.
[3] The rubber composition for a hose according to [1] or [2], wherein the rubber component is composed only of the chloroprene rubber and the butadiene rubber.
[4] The rubber composition for a hose according to any one of [1] to [3], wherein
   the rubber composition further includes carbon black, and
   the carbon black is contained in an amount of more than 50 parts by mass per 100 parts by mass of the rubber component.
[5] The rubber composition for a hose according to any one of [1] to [4], wherein the sulfur is contained in an amount of from 0.9 to 2.0 parts by mass per 100 parts by mass of the rubber component.
[6] The rubber composition for a hose according to any one of [1] to [5], wherein a content of a flame-retardant plasticizer is 0 parts by mass or less than 2 parts by mass per 100 parts by mass of the rubber component.
[7] The rubber composition for a hose according to any one of [1] to [6], wherein
   the chloroprene rubber is contained in an amount of 65 mass% or more and less than 75 mass% of the total mass of the rubber component,
   the butadiene rubber is contained in an amount of more than 25 mass% and 35 mass% or less of the total mass of the rubber component, and
   the sulfur is contained in an amount of from 0.9 to 1.3 parts by mass per 100 parts by mass of the rubber component.
[8] The rubber composition for a hose according to any one of [1] to [7], the rubber composition further including silica.
[9] A hose including a rubber layer formed of the rubber composition for a hose according to any one of [1] to [8].
[10] The hose according to [9], wherein the rubber layer is an outermost layer.

### Advantageous Effects of Invention

A rubber composition for a hose according to an embodiment of the present invention is excellent in processability and can obtain a resulting rubber excellent in flame retardancy, wear resistance, and compression set.

A hose according to an embodiment of the present invention is excellent in processability, flame retardancy, wear resistance, and sealability.

### Brief Description of Drawings

FIG. 1 is a perspective view illustrating an example of a hose according to an embodiment of the present invention with each layer being cut out.
FIG. 2 is a perspective view illustrating another example of the hose according to an embodiment of the present invention with each layer being cut out.

### Description of Embodiments

Embodiments of the present invention will be described in detail below.

In the present specification, a numerical range indicated using "(from) ... to ..." includes the former number as the lower limit value and the latter number as the upper limit value.

In the present specification, unless otherwise specified, a substance corresponding to each component may be used alone or in combination of two or more thereof. In a case where a component includes two or more types of substances, content of component means the total content of the two or more types of substances.

In the present specification, the fact that at least one of processability, flame retardancy, wear resistance, and compression set of the rubber composition for a hose is exhibited in a more excellent manner is referred to as exhibiting the effects of the present invention in a more excellent manner. Furthermore, the fact that at least one of processability, flame retardancy, wear resistance, and sealability of the hose is exhibited in a more excellent manner is referred to as exhibiting the effects of the present invention in a more excellent manner.

### Rubber Composition for Hose

The rubber composition for a hose according to an embodiment of the present invention (rubber composition according to an embodiment of the present invention) is a rubber composition for a hose including:
a rubber component containing chloroprene rubber and butadiene rubber;
sulfur; and
an aromatic oil,
the chloroprene rubber being contained in an amount of 60 mass% or more and less than 75 mass% of a total mass of the rubber component,
the butadiene rubber being contained in an amount of more than 25 mass% and 40 mass% or less of the total mass of the rubber component,
the sulfur being contained in an amount of more than 0.2 parts by mass and less than 2.5 parts by mass per 100 parts by mass of the rubber component,
the aromatic oil being contained in an amount of 10 parts by mass or more per 100 parts by mass of the rubber component, and
a silane coupling agent being contained in an amount of from 0 to 2 mass% with respect to the total mass of the rubber component.

Each of the components contained in the rubber composition according to an embodiment of the present invention will be described in detail below.

### Rubber Component

In the present invention, the rubber component contains a chloroprene rubber and a butadiene rubber.

### Chloroprene Rubber

In the present invention, the chloroprene rubber (CR) contained in the rubber component is not particularly limited.

Examples of the CR include a homopolymer of chloroprene and a copolymer of chloroprene and a monomer copolymerizable with chloroprene.

The CR may be, for example, sulfur-modified, mercapto-modified, or xanthogen-modified.

### Butadiene Rubber

In the present invention, the butadiene rubber (BR) contained in the rubber component is not particularly limited, and examples thereof include those known in the related art.

The weight average molecular weight of the butadiene rubber is not particularly limited, but is preferably from 50,000 to 1,000,000, and more preferably from 200,000 to 800,000.

The butadiene rubber is preferably a butadiene rubber having a high cis structure from the viewpoint of exhibiting the effects of the present invention in a more excellent manner. Specifically, the butadiene rubber is more preferably a butadiene rubber having a cis-1,4 bond content of 90% or more, and still more preferably a butadiene rubber having a cis-1,4 bond content of 95% or more.

Such a butadiene rubber with a high cis structure can be polymerized by a typical method using a Ziegler catalyst, neodymium catalyst, or the like, for example.

### Content of CR

In the present invention, the content of the chloroprene rubber is 60 mass% or more and less than 75 mass% of the total mass (in the total mass) of the rubber component. Setting the content of CR to the range described above allows the rubber composition according to an embodiment of the present invention to exhibit excellent flame retardancy, wear resistance, and compression set.

The content of CR is preferably 65 mass% or more and less than 75 mass% of the total mass of the rubber component from the viewpoint of exhibiting the effects (in particular, flame retardancy) of the present invention in a more excellent manner.

### Content of BR

In the present invention, the content of the butadiene rubber is more than 25 mass% (exceeds 25 mass%) and 40 mass% or less of the total mass of the rubber component. Setting the content of BR to the range described above allows the rubber composition according to an embodiment of the present invention to exhibit excellent wear resistance and compression set.

The content of BR is preferably more than 25 mass% and 35 mass% or less of the total mass of the rubber component from the viewpoint of exhibiting the effects of the present invention in a more excellent manner.

### Total Content of CR and BR

The total content of the chloroprene rubber and the butadiene rubber is preferably more than 90 mass%, and more preferably 95 mass% or more of the total mass of the rubber component from the viewpoint of exhibiting the effects of the present invention in a more excellent manner.

The rubber component is preferably composed only of a chloroprene rubber and a butadiene rubber (containing only a chloroprene rubber and a butadiene rubber) from the viewpoint of exhibiting the effects of the present invention in a more excellent manner.

### Optional Rubber

The rubber component may further contain any other optional rubber as long as the rubber component contains the chloroprene rubber and the butadiene rubber in the above-described mass%.

Examples of the other optional rubber include conjugated diene-based rubbers such as natural rubber (NR), isoprene rubber (IR), styrene-butadiene rubber (SBR), acrylonitrile butadiene rubber (NBR), butyl rubber (IIR), and halogenated butyl rubber (Br-IIR, Cl-IIR).

When the other optional rubber is a styrene-butadiene rubber (SBR), the content of the SBR is preferably 0 mass% or less than 10 mass% of the total mass of the rubber component from the viewpoint of exhibiting the effects of the present invention in a more excellent manner.

### Sulfur

The rubber composition according to an embodiment of the present invention contains sulfur.

The sulfur is not particularly limited as long as it is a simple substance of sulfur. Examples thereof include known ones.

### Content of Sulfur

In the present invention, the content of sulfur is more than 0.2 parts by mass and less than 2.5 parts by mass per 100 parts by mass of the rubber component. Setting the content of sulfur to the range described above allows the rubber composition according to an embodiment of the present invention to exhibit excellent processability, wear resistance, and compression set.

The content of sulfur is preferably from 0.9 to 2.0 parts by mass, and more preferably from 0.9 to 1.5 parts by mass per 100 parts by mass of the rubber component from the viewpoint of exhibiting the effects of the present invention in a more excellent manner.

### Content of CR, BR, and Sulfur

The combination of the contents of CR, BR, and sulfur is preferably such that the content of chloroprene rubber is 65 mass% or more and less than 75 mass% of the total mass of the rubber component, the content of butadiene rubber is more than 25 mass% and 35 mass% or less of the total mass of the rubber component, and the content of sulfur is from 0.9 to 1.3 parts by mass per 100 parts by mass of the rubber component, from the viewpoint of exhibiting the effects of the present invention in a more excellent manner (in particular, more excellent scorch time and flame retardancy, and excellent balance between scorch time, flame retardancy, compression set, and wear resistance).

### Aromatic Oil

The rubber composition according to an embodiment of the present invention contains an aromatic oil.

In the present invention, the aromatic oil refers to an oil having an aromatic hydrocarbon content (C_{A}) of 20 mass% or more in the oil.

### (C_{A})

The content (C_{A}) of the aromatic hydrocarbon in the aromatic oil is preferably from 25 to 70 mass% from the viewpoint of exhibiting the effects of the present invention in a more excellent manner.

### (CP)

The content (C_{P}) of the paraffinic hydrocarbon in the aromatic oil is preferably from 20 to 70 mass% from the viewpoint of exhibiting the effects of the present invention in a more excellent manner.

### (C_{N})

The content (C_{N}) of the naphthenic hydrocarbon in the aromatic oil is preferably from 10 to 50 mass% from the viewpoint of exhibiting the effects of the present invention in a more excellent manner.

C_{A}, C_{P}, and C_{N} of the oil can be measured according to the ring analysis method (n-d-M method) (ASTM D3238).

### Aromatic Oil

In the present invention, the content of the aromatic oil is 10 parts by mass or more per 100 parts by mass of the rubber component described above. Setting the content of the aromatic oil to the range described above allows the rubber composition according to an embodiment of the present invention to exhibit excellent processability.

The content of the aromatic oil is preferably from 10 to 25 parts by mass, more preferably from 11 to 18 parts by mass, and still more preferably from 11 to 14 parts by mass per 100 parts by mass of the rubber component from the viewpoint of exhibiting the effects of the present invention in a more excellent manner.

### Silane Coupling Agent

In the present invention, the content of the silane coupling agent is from 0 to 2 mass% with respect to the total mass of the rubber component described above. Setting the content of the silane coupling agent to the range described above allows the rubber composition according to an embodiment of the present invention to exhibit excellent compression set.

The content of the silane coupling agent is preferably from 0 to 1 mass% with respect to the total mass of the rubber component from the viewpoint of exhibiting the effects of the present invention in a more excellent manner.

The silane coupling agent is not particularly limited as long as it is a compound that can be used as a silane coupling agent in the rubber composition. The silane coupling agent usually refers to a compound having a hydrolyzable silyl group and a functional group (not including a hydrolyzable silyl group). Examples of the hydrolyzable silyl group include alkoxysilyl groups. Examples of the functional group include a hydroxy group, an amino group, an epoxy group, and a thiol group. The hydrolyzable silyl group and the functional group can be bonded via a linking group, and the linking group is not particularly limited.

### Carbon Black

The rubber composition according to an embodiment of the present invention preferably further contains carbon black from the viewpoint of improving the reinforcing property of the resulting rubber or hose.

The carbon black is not particularly limited. Examples of the carbon black include SAF-HS, SAF, ISAF-HS, ISAF, ISAF-LS, IISAF-HS, HAF-HS, HAF, HAF-LS, FEF, GPF, and SRF.

One type of carbon black may be used alone, or two or more types thereof may be used in combination.

### Content of Carbon Black

When the rubber composition according to an embodiment of the present invention further contains carbon black, the content of the carbon black is preferably more than 50 parts by mass, more preferably from 60 to 90 parts by mass, and still more preferably from 65 to 80 parts by mass per 100 parts by mass of the rubber component, from the viewpoint of exhibiting the effects of the present invention in a more excellent manner and improving the reinforcing property of the resulting rubber (or hose).

### Silica

The rubber composition according to an embodiment of the present invention preferably further contains silica from the viewpoint of exhibiting the effects (in particular, flame retardancy) of the present invention in a more excellent manner.

The silica is not particularly limited. Examples of the silica include natural silica, fused silica, amorphous silica, hollow silica, and fumed silica.

When the rubber composition according to an embodiment of the present invention further contains silica, the content of the silica is preferably from 5 to 25 parts by mass and more preferably from 10 to 20 parts by mass per 100 parts by mass of the rubber component from the viewpoint of exhibiting the effects

### of the present invention in a more excellent manner.

### Flame-Retardant Plasticizer

In the present invention, the content of the flame-retardant plasticizer is preferably 0 parts by mass or less than 2 parts by mass, and more preferably from 0 to 1 parts by mass, per 100 parts by mass of the rubber component.

The flame-retardant plasticizer is not particularly limited as long as it is a plasticizer having flame retardancy. Examples of the flame-retardant plasticizer include chlorine-based aliphatic compounds such as chlorinated paraffin; halogen-based phosphate compounds such as trischloropropyl phosphate and a condensate of trischloropropyl phosphate and dialkylene glycol; non-halogen-based phosphate compounds such as triphenyl phosphate and tricresyl phosphate; and silicone-based compounds such as polydialkylsiloxane.

The flame-retardant plasticizer does not include the aromatic oil described above.

### Additives

The rubber composition according to an embodiment of the present invention may further contain an additive as necessary.

Examples of the additive include plasticizers other than the aromatic oil and the flame-retardant plasticizer, fillers other than silica and carbon black, softening agents, anti-aging agents, antioxidants, antistatic agents, flame retardants (other than the flame-retardant plasticizer), vulcanization accelerators, vulcanization aids (for example, stearic acid and zinc oxide), vulcanization retarders, adhesion aids, and waxes.

### • Plasticizer other than aromatic oil and flame-retardant plasticizer

Examples of the plasticizer other than the aromatic oil and the flame-retardant plasticizer include ester compounds such as dioctyl phthalate (DOP), dibutyl phthalate (DBP), dioctyl adipate (DOA), isodecyl succinate, diethylene glycol dibenzoate, pentaerythritol ester, butyl oleate, methyl acetylricinoleate, trimellitic acid ester, propylene glycol adipate polyester, and butylene glycol adipate polyester; naphthenic oils; and paraffinic oils.

### • Flame retardant

Examples of the flame retardant include inorganic oxides (excluding silica) such as aluminum hydroxide and magnesium hydroxide.

When the rubber composition according to an embodiment of the present invention further contains a flame retardant, the content of the flame retardant (excluding silica) is preferably from 1 to 10 parts by mass per 100 parts by mass of the rubber component from the viewpoint of exhibiting the effects (in particular, flame retardancy) of the present invention in a more excellent manner.

### Method for Producing Rubber Composition

The method for producing the rubber composition according to an embodiment of the present invention is not particularly limited. Examples of the method include a known method and a method of mixing the components described above using a device (for example, a Banbury mixer, a kneader, or a roll).

When the rubber composition according to an embodiment of the present invention contains a vulcanizing agent or a vulcanization accelerator, for example, a Banbury mixer or the like is used to mix the essential components described above and additives (excluding a vulcanizing agent and a vulcanization accelerator) that can be used as necessary to prepare a mixture, and then a vulcanizing agent and a vulcanization accelerator are added to the mixture, and these are further mixed to produce a rubber composition.

The vulcanization of the rubber composition according to an embodiment of the present invention is not particularly limited. For example, vulcanization may be performed by a known method under a known condition.

The rubber composition according to an embodiment of the present invention can be used as a rubber composition for a hose.

A hose having a rubber layer formed of the rubber composition according to an embodiment of the present invention can be a flame-retardant hose.

### Hose

The hose according to an embodiment of the present invention is a hose having a rubber layer formed of the rubber composition for a hose according to an embodiment of the present invention.

The hose according to an embodiment of the present invention may be a hose having a rubber layer formed of the rubber composition for a hose according to an embodiment of the present invention.

The rubber composition used for forming the rubber layer of the hose according to an embodiment of the present invention is not particularly limited as long as it is the rubber composition for a hose according to an embodiment of the present invention (rubber composition according to an embodiment of the present invention).

Since the hose according to an embodiment of the present invention has the rubber layer formed using the rubber composition according to an embodiment of the present invention, all of processability, flame retardancy, wear resistance, and sealability (compression set) are good. The hose according to an embodiment of the present invention can be used as a flame-retardant hose.

### Rubber Layer

Examples of a normal rubber layer of a typical hose include an outermost layer, an inner layer, and an intermediate rubber layer. The hose according to an embodiment of the present invention can also have, for example, an outermost layer, an inner layer, and an intermediate rubber layer as the rubber layer, as in a typical hose.

In the hose according to an embodiment of the present invention, the rubber layer formed using the rubber composition according to an embodiment of the present invention may be any of an outermost layer, an inner layer, and an intermediate rubber layer.

In the hose according to an embodiment of the present invention, the rubber layer formed using the rubber composition according to an embodiment of the present invention is preferably at least an outermost layer from the viewpoint of exhibiting the effects of the present invention in a more excellent manner.

When the outermost layer of the hose according to an embodiment of the present invention is a rubber layer formed using the rubber composition according to an embodiment of the present invention, the rubber composition forming an inner layer is not particularly limited and may be the rubber composition according to an embodiment of the present invention. The same applies to the intermediate rubber layer.

### Outermost Layer

As one of preferred aspects, the hose according to an embodiment of the present invention has an outermost layer, and the outermost layer is formed using the rubber composition according to an embodiment of the present invention.

The thickness of the outermost layer may be from 0.2 to 4 mm.

### Inner Layer

The rubber composition that forms the inner layer is not particularly limited. For example, known ones can be used. The inner layer may be formed using the rubber composition according to an embodiment of the present invention.

The thickness of the inner layer may be, for example, from 0.2 to 4 mm.

### Intermediate Rubber Layer

The rubber composition that forms the intermediate rubber layer is not particularly limited. For example, known ones can be used. The intermediate rubber layer may be formed using the rubber composition according to an embodiment of the present invention. The hose according to an embodiment of the present invention may have the intermediate rubber layer in a form of a single layer or multiple layers.

The thickness of the intermediate rubber layer may be, for example, from 0.2 to 0.7 mm.

### Reinforcing Layer

When there are a plurality of rubber layers, the hose according to an embodiment of the present invention may further have a reinforcing layer between the rubber layers. The reinforcing layer may be in a form of a single layer or multiple layers.

The material of the reinforcing layer is not particularly limited. Examples of the material include metals and fiber materials (e.g., polyamide and polyester). Examples of the form of the reinforcing layer include a blade and a spiral.

Hereinafter, the hose according to an embodiment of the present invention will be described with reference to the accompanying drawings. However, the present invention is not limited to the attached drawings.

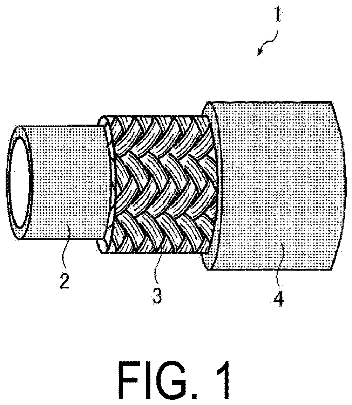

FIG. 1 is a perspective view illustrating an example of a hose according to an embodiment of the present invention with each layer being cut out.

In FIG. 1, a hose 1 includes an inner layer 2, a reinforcing layer 3 on the inner layer 2, and an outermost layer 4 as an outer layer.

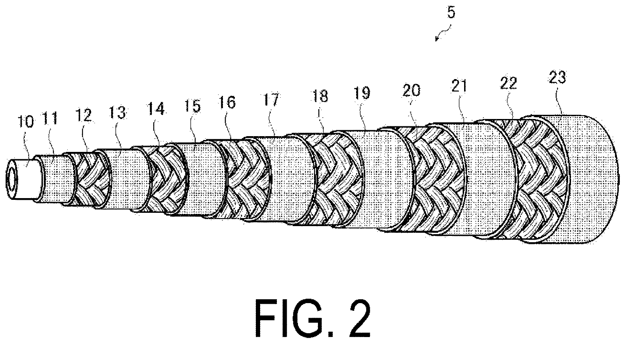

FIG. 2 is a perspective view illustrating another example of the hose according to an embodiment of the present invention with each layer being cut out.

In FIG. 2, the hose 5 includes an inner layer 10 at the innermost layer and an outermost layer 23, and includes intermediate rubber layers 11, 13, 15, 17, 19, and 21 and reinforcing layers 12, 14, 16, 18, 20, and 22 alternately between the inner layer 10 and the outermost layer 23.

### Method for Producing Hose

The method for producing the hose according to an embodiment of the present invention is not particularly limited. For example, the hose according to an embodiment of the present invention may be produced by stacking an inner layer, an intermediate rubber layer, a reinforcing layer, and an outermost layer in this order on a mandrel, covering the stack with a nylon cloth or the like, and vulcanizing and bonding the stack with the nylon cloth or the like by steam vulcanization, oven vulcanization (hot-air vulcanization) or hot-water vulcanization at a temperature of from 140 to 190°C.

### Use of Hose

The hose according to an embodiment of the present invention can be used as a hydraulic hose, a refrigerant transport hose, a marine hose, or the like, for example.

### Examples

An embodiment of the present invention will be described below in detail by way of examples. Materials, used amounts, proportions, treatment details, treatment procedure, and the like described in the following examples can be appropriately modified without departing from the gist of an embodiment of the present invention. Thus, the scope of the present invention is not limited to the following examples.

### Production of Rubber Composition

Using a Banbury mixer, the components shown in Table 1 below except for the four components (sulfur, zinc oxide, vulcanization accelerator TS, and vulcanization accelerator DPG) were mixed in the proportions (parts by mass) shown in the table to prepare a master batch.

Next, the four components were added to the obtained master batch, and these were mixed with an open roll to produce each rubber composition.

### Evaluation

The following evaluations were performed by using each of the rubber compositions produced as described above. The results are present in Table 1. The evaluation results other than the flame retardancy are represented by indexes with the result of Comparative Example 5 as 100.

### Mooney Scorch Test: Processability

For each of the obtained rubber compositions, the scorch time (ML 5 up) was measured using a Mooney viscometer (L-shaped rotor) under the conditions of a preheat time of 1 minute and a test temperature of 125°C in accordance with "Mooney Scorch Test" described in JIS K6300-1:2013 (Rubber, unvulcanized - Physical property - Part 1: Determination of Mooney viscosity and pre-vulcanization characteristics with Mooney viscometer).

### • Evaluation criteria of scorch time

When the scorch time (index) was 40 or more, the processability of the rubber composition was evaluated as excellent and was indicated as "∘". When the scorch time (index) was 80 or more, the processability of the rubber composition was exhibited in a more excellent manner.

When the scorch time (index) was less than 40, the processability of the rubber composition was evaluated as poor and was indicated as "×".

### Compression Set: Sealability

Each of the obtained rubber compositions was vulcanized for 45 minutes under the conditions of 148°C and a surface pressure of 3.0 MPa using a press molding machine to produce a sheet, and the sheet was then punched out to have a diameter of 13.0 ± 0.5 mm and a thickness of 6 mm to produce a disk-shaped test piece.

The compression set (%) of the test piece was measured at a test temperature of 100°C, a test time of 72 h, and a compression ratio of 25% in accordance with JIS K6262:2013.

### • Evaluation criteria of compression set

In the present invention, when the compression set (index) was less than 100, the sealability of the hose was evaluated as excellent and was indicated as "∘". As the compression set (index) was lower than 100, the sealability of the hose was exhibited in a more excellent manner, and when the compression set (index) was 77 or less, the sealability was exhibited in a further excellent manner.

When the compression set (index) was 100 or more, the sealability of the hose was evaluated as poor and was indicated as "×",

### Wear Resistance (Pico Abrasion Test)

Each of the obtained rubber compositions was vulcanized for 45 minutes under the conditions of 148°C and a surface pressure of 3.0 MPa using a press molding machine in accordance with JIS K6264-2:2005 (Pico abrasion test) to produce a test piece, and the wear amount (mL) of the test piece was measured under the conditions of 23°C, a test piece applied force of 44 N, and a rotation speed of 60 ± 2 rotations per minute.

### • Evaluation criteria of wear test

In the present invention, when the wear amount (index) was 110 or less, the wear resistance was evaluated as excellent and was indicated as "∘". The lower the wear amount (index) is below 110, the more excellent the wear resistance.

When the wear amount (index) exceeded 110, the wear resistance was evaluated as poor and was indicated as "×".

### Flame Retardancy

Each of the obtained rubber compositions was press-vulcanized in a mold under the conditions of 148°C and a surface pressure of 3.0 MPa for 45 minutes, and a sample for evaluation of flame retardancy was cut out from the obtained vulcanized rubber sheet so as to have a length of 150 mm, a width of 12.7 mm, and a thickness of 2.5 mm.

Based on the flame retardancy evaluation of ASTP5007 (version: 2012-02-12) of MSHA standards (U.S. Mine Safety and Health Administration standards), the flame extinction time and the afterglow extinction time were measured using the flame retardancy evaluation samples obtained as described above. The obtained flame extinction time and afterglow extinction time were applied to the following criteria to evaluate the flame retardancy.

### • Evaluation criteria of flame extinction time and afterglow extinction time

When the flame extinction time was 30 seconds or less and the afterglow extinction time was 120 seconds or less, the flame retardancy was evaluated as more excellent and was indicated as "⊚.

When the flame extinction time was 60 seconds or less and the afterglow extinction time was 180 seconds or less, the flame retardancy was evaluated as excellent and was indicated as "∘". However, the above ⊚ is excluded.

When the flame extinction time exceeded 60 seconds or when the afterglow extinction time exceeded 180 seconds, the flame retardancy was evaluated as poor and was indicated as "×".

**Table 1-1**

| Table 1 | Comparative Example | Comparative Example | Example | Example |
|---|---|---|---|---|
| | 1 | 2 | 1 | 2 |
| BR | 50 | 40 | 40 | 40 |
| CR | 50 | 60 | 60 | 60 |
| SBR | | | | |
| CB (FEF) | 70 | 70 | 70 | 70 |
| Silica | 15 | 15 | 15 | 15 |
| Magnesium oxide | 4 | 4 | 4 | 4 |
| Stearic acid | 2 | 2 | 2 | 2 |
| Silane coupling agent | | | | |
| Aromatic oil | 13 | 8 | 13 | 13 |
| Zinc oxide | 5 | 5 | 5 | 5 |
| Sulfur | 0.5 | 2.3 | 0.5 | 0.9 |
| Vulcanization accelerator TS | 1 | 1 | 1 | 1 |
| Vulcanization accelerator DPG | 1 | 1 | 1 | 1 |
| Scorch time (index) | 126 | 36 | 125 | 108 |
| Scorch time (○×) | ○ | × | ○ | ○ |
| Compression set (index) | 54 | 45 | 67 | 63 |
| Compression set (○×) | O | ○ | ○ | ○ |
| Wear resistance (wear amount index) | 57 | 35 | 88 | 80 |
| Wear resistance (○×) | ○ | ○ | ○ | ○ |
| Flame retardancy (MSHA flame retardancy standard) | × | ○ | ○ | ○ |

**Table 1-2**

| Table 1 | Example | Example | Example | Example | Example | Comparative Example |
|---|---|---|---|---|---|---|
| | 3 | 4 | 5 | 6 | 7 | 3 |
| BR | 40 | 40 | 40 | 40 | 40 | 40 |
| CR | 60 | 60 | 60 | 60 | 60 | 60 |
| SBR | | | | | | |
| CB (FEF) | 70 | 70 | 70 | 70 | 70 | 70 |
| Silica | 15 | 15 | 15 | 15 | 15 | 15 |
| Magnesium oxide | 4 | 4 | 4 | 4 | 4 | 4 |
| Stearic acid | 2 | 2 | 2 | 2 | 2 | 2 |
| Silane coupling agent | | | | | | |
| Aromatic oil | 13 | 13 | 13 | 13 | 13 | 13 |
| Zinc oxide | 5 | 5 | 5 | 5 | 5 | 5 |
| Sulfur | 1.2 | 1.5 | 1.8 | 2.0 | 2.3 | 2.5 |
| Vulcanization accelerator TS | 1 | 1 | 1 | 1 | 1 | 1 |
| Vulcanization accelerator DPG | 1 | 1 | 1 | 1 | 1 | 1 |
| Scorch time (index) | 92 | 79 | 65 | 57 | 42 | 34 |
| Scorch time (○×) | ○ | ○ | ○ | ○ | ○ | × |
| Compression set (index) | 60 | 57 | 54 | 52 | 49 | 47 |
| Compression set (○×) | ○ | ○ | ○ | ○ | ○ | ○ |
| Wear resistance (wear amount index) | 73 | 67 | 61 | 58 | 51 | 47 |
| Wear resistance (○×) | ○ | ○ | ○ | ○ | ○ | ○ |
| Flame retardancy (MSHA flame retardancy standard) | ○ | ○ | ○ | ○ | ○ | ○ |

**Table 2**

| Table 1 (continued) | Comparative Example | Comparative Example | Comparative Example | Comparative Example | Example | Example |
|---|---|---|---|---|---|---|
| | 4 | 5 | 6 | 7 | 8 | 9 |
| BR | 25 | 30 | 15 | 30 | 30 | 30 |
| CR | 75 | 70 | 70 | 70 | 70 | 70 |
| SBR | | | 15 | | | |
| CB (FEF) | 70 | 70 | 70 | 70 | 70 | 70 |
| Silica | 15 | 15 | 15 | 15 | | |
| Magnesium oxide | 4 | 4 | 4 | 4 | 4 | 4 |
| Stearic acid | 2 | 2 | 2 | 2 | 2 | 2 |
| Silane coupling agent | | 3 | | | | |
| Aromatic oil | 13 | 13 | 13 | 8 | 13 | 13 |
| Zinc oxide | 5 | 5 | 5 | 5 | 5 | 5 |
| Sulfur | 0.5 | 0.5 | 0.5 | 2.3 | 0.5 | 1.0 |
| Vulcanization accelerator TS | 1 | 1 | 1 | 1 | 1 | 1 |
| Vulcanization accelerator DPG | 1 | 1 | 1 | 1 | 1 | 1 |
| Scorch time (index) | 124 | 100 | 158 | 36 | 117 | 95 |
| Scorch time (○×) | ○ | ○ | ○ | × | ○ | ○ |
| Compression set (index) | 87 | 100 | 91 | 59 | 54 | 50 |
| Compression set (○×) | ○ | × | ○ | ○ | ○ | ○ |
| Wear resistance (wear amount index) | 134 | 100 | 184 | 69 | 86 | 76 |
| Wear resistance (○×) | × | ○ | × | ○ | ○ | ○ |
| Flame retardancy (MSHA flame retardancy standard) | ⊚ | ⊚ | ⊚ | ⊚ | ○ | ○ |

**Table 3-1**

| Table 1 (continued) | Comparative Example | Example | Example | Example | Example |
|---|---|---|---|---|---|
| | 8 | 10 | 11 | 12 | 13 |
| BR | 30 | 30 | 30 | 30 | 30 |
| CR | 70 | 70 | 70 | 70 | 70 |
| SBR | | | | | |
| CB (FEF) | 70 | 70 | 70 | 70 | 70 |
| Silica | 15 | 15 | 15 | 15 | 15 |
| Magnesium oxide | 4 | 4 | 4 | 4 | 4 |
| Stearic acid | 2 | 2 | 2 | 2 | 2 |
| Silane coupling agent | | | | | |
| Aromatic oil | 13 | 13 | 13 | 13 | 13 |
| Zinc oxide | 5 | 5 | 5 | 5 | 5 |
| Sulfur | 0.2 | 0.5 | 0.9 | 1.2 | 1.5 |
| Vulcanization accelerator TS | 1 | 1 | 1 | 1 | 1 |
| Vulcanization accelerator DPG | 1 | 1 | 1 | 1 | 1 |
| Scorch time (index) | 141 | 125 | 113 | 92 | 80 |
| Scorch time (○×) | ○ | ○ | ○ | ○ | ○ |
| Compression set (index) | 84 | 80 | 77 | 73 | 71 |
| Compression set (○×) | O | ○ | ○ | ○ | ○ |
| Wear resistance (wear amount index) | 113 | 106 | 105 | 108 | 102 |
| Wear resistance (○×) | × | ○ | ○ | ○ | ○ |
| Flame retardancy (MSHA flame retardancy standard) | ⊚ | ⊚ | ⊚ | ⊚ | ⊚ |

**Table 3-2**

| Table 1 (continued) | Example | Example | Example | Comparative Example |
|---|---|---|---|---|
| | 14 | 15 | 16 | 9 |
| BR | 30 | 30 | 30 | 30 |
| CR | 70 | 70 | 70 | 70 |
| SBR | | | | |
| CB (FEF) | 70 | 70 | 70 | 70 |
| Silica | 15 | 15 | 15 | 15 |
| Magnesium oxide | 4 | 4 | 4 | 4 |
| Stearic acid | 2 | 2 | 2 | 2 |
| Silane coupling agent | | | | |
| Aromatic oil | 13 | 13 | 13 | 13 |
| Zinc oxide | 5 | 5 | 5 | 5 |
| Sulfur | 1.8 | 2.0 | 2.3 | 2.5 |
| Vulcanization accelerator TS | 1 | 1 | 1 | 1 |
| Vulcanization accelerator DPG | 1 | 1 | 1 | 1 |
| Scorch time (index) | 66 | 58 | 43 | 35 |
| Scorch time (○×) | ○ | ○ | ○ | × |
| Compression set (index) | 68 | 66 | 63 | 75 |
| Compression set (○×) | ○ | ○ | ○ | ○ |
| Wear resistance (wear amount index) | 96 | 92 | 85 | 82 |
| Wear resistance (○×) | ○ | ○ | ○ | ○ |
| Flame retardancy (MSHA flame retardancy standard) | ⊚ | ⊚ | ⊚ | ⊚ |

**Table 4**

| Table 1 (continued) | Example | Example | Example | Example |
|---|---|---|---|---|
| | 17 | 18 | 19 | 20 |
| BR | 40 | 40 | 40 | 40 |
| CR | 60 | 60 | 60 | 60 |
| SBR | | | | |
| CB (FEF) | 60 | 70 | 80 | 100 |
| Silica | 15 | 15 | 15 | 15 |
| Magnesium oxide | 4 | 4 | 4 | 4 |
| Stearic acid | 2 | 2 | 2 | 2 |
| Silane coupling agent | | | | |
| Aromatic oil | 13 | 13 | 13 | 13 |
| Zinc oxide | 5 | 5 | 5 | 5 |
| Sulfur | 0.5 | 0.5 | 0.5 | 0.5 |
| Vulcanization accelerator TS | 1 | 1 | 1 | 1 |
| Vulcanization accelerator DPG | 1 | 1 | 1 | 1 |
| Scorch time (index) | 142 | 125 | 108 | 74 |
| Scorch time (○×) | ○ | ○ | ○ | ○ |
| Compression set (index) | 70 | 67 | 65 | 62 |
| Compression set (○×) | ○ | ○ | ○ | ○ |
| Wear resistance (wear amount index) | 100 | 88 | 76 | 53 |
| Wear resistance (○×) | ○ | ○ | ○ | ○ |
| Flame retardancy (MSHA flame retardancy standard) | ○ | ○ | ○ | ○ |

Details of the components shown in Table 1 are as follows.

### Rubber Component

- BR: butadiene rubber. Nipol BR1220 (available from Zeon Corporation)
- CR: chloroprene rubber. DENKA CHLOROPRENE S-41 (available from Denka Company Limited)
- SBR: Styrene-butadiene rubber. Nipol 1502 (available from Zeon Corporation)
- CB (FEF): carbon black. NITERON#10N (FEF-grade carbon black, available from Nippon Steel Chemical Carbon Co., Ltd.)
- Silica: Nipsil AQ (available from Tosoh Silica Corporation)
- Magnesium oxide: Kyowamag 150 (available from Kyowa Chemical Industry Co., Ltd.)
- Stearic acid: Industrial stearic acid N (available from Chiba Fatty Acid Co., Ltd.)
- Silane coupling agent: Si69 [bis(3-triethoxysilylpropyl) tetrasulfide, available from Evonik Degussa Corporation]
- Aromatic oil: aroma oil. A/O MIX 2010 (available from Sankyo Yuka Kogyo K.K.). The product above corresponds to the aromatic oil (oil having an aromatic hydrocarbon content (C_{A}) of 20 mass% or more in the oil) in the present invention.
- Zinc oxide: three types of zinc oxide (available from Seido Chemical Industry Co., Ltd.)
- Sulfur: oil-treated sulfur (available from Hosoi Chemical Industry Co., Ltd.)
- Vulcanization accelerator TS: SANCELER TS-G (available from Sanshin Chemical Industry Co., Ltd.)
- Vulcanization accelerator DPG: SANCELER D-G (available from Sanshin Chemical Industry Co., Ltd.)

From the results shown in Table 1, Comparative Example 1 in which BR and CR did not satisfy the predetermined contents had poor flame retardancy.

Comparative Examples 2 and 7 in which the content of the aromatic oil did not satisfy the predetermined range had poor processability.

Comparative Examples 3 and 9 in which the amount of sulfur was more than the predetermined range had poor processability.

Comparative Example 4 in which the content of BR was 25 mass% in the rubber component and the content of CR was 75 mass% in the rubber component had poor wear resistance.

Comparative Example 5 in which the silane coupling agent was contained in an amount of 3 mass% of the total content of the rubber component had poor compression set (sealability as a hose).

Comparative Example 6 in which BR did not satisfy the predetermined content had poor compression set (sealability as a hose) and wear resistance.

Comparative Example 8 in which the amount of sulfur was less than the predetermined range had poor wear resistance.

On the other hand, the rubber composition according to an embodiment of the present invention was excellent in processability, and the resulting rubber was excellent in flame retardancy, wear resistance, and compression set.

From the above results, it can be said that the hose according to an embodiment of the present invention is excellent in processability, flame retardancy, wear resistance, and sealability.

### Reference Signs List

1, 5: Hose
2, 10: Inner layer
3, 12, 14, 16, 18, 20, 22: Reinforcing layer
4, 23: Outermost layer
11, 13, 15, 17, 19, 21: Intermediate rubber layer

## Claims

1. A rubber composition for a hose, the rubber composition comprising:
a rubber component containing chloroprene rubber and butadiene rubber;
sulfur; and
an aromatic oil,
the chloroprene rubber being contained in an amount of 60 mass% or more and less than 75 mass% of a total mass of the rubber component,
the butadiene rubber being contained in an amount of more than 25 mass% and 40 mass% or less of the total mass of the rubber component,
the sulfur being contained in an amount of more than 0.2 parts by mass and less than 2.5 parts by mass per 100 parts by mass of the rubber component,
the aromatic oil being contained in an amount of 10 parts by mass or more per 100 parts by mass of the rubber component, and
a silane coupling agent being contained in an amount of from 0 to 2 mass% with respect to the total mass of the rubber component.

2. The rubber composition for a hose according to claim 1, wherein a total content of the chloroprene rubber and the butadiene rubber is more than 90 mass% of the total mass of the rubber component.

3. The rubber composition for a hose according to claim 1 or 2, wherein the rubber component is composed only of the chloroprene rubber and the butadiene rubber.

4. The rubber composition for a hose according to any one of claims 1 to 3, wherein
the rubber composition further comprises carbon black, and
the carbon black is contained in an amount of more than 50 parts by mass per 100 parts by mass of the rubber component.

5. The rubber composition for a hose according to any one of claims 1 to 4, wherein the sulfur is contained in an amount of from 0.9 to 2.0 parts by mass per 100 parts by mass of the rubber component.

6. The rubber composition for a hose according to any one of claims 1 to 5, wherein a content of a flame-retardant plasticizer is 0 parts by mass or less than 2 parts by mass per 100 parts by mass of the rubber component.

7. The rubber composition for a hose according to any one of claims 1 to 6, wherein
the chloroprene rubber is contained in an amount of 65 mass% or more and less than 75 mass% of the total mass of the rubber component,
the butadiene rubber is contained in an amount of more than 25 mass% and 35 mass% or less of the total mass of the rubber component, and
the sulfur is contained in an amount of from 0.9 to 1.3 parts by mass per 100 parts by mass of the rubber component.

8. The rubber composition for a hose according to any one of claims 1 to 7, the rubber composition further comprising silica.

9. A hose comprising a rubber layer formed of the rubber composition for a hose according to any one of claims 1 to 8.

10. The hose according to claim 9, wherein the rubber layer is an outermost layer.
